(19) Europäisches Patentamt
European Patent Office
Office européen des brevets

(11) EP 1 279 652 A1

(12) **EUROPEAN PATENT APPLICATION**

(43) Date of publication:
**29.01.2003 Bulletin 2003/05**

(51) Int Cl.[7]: **C04B 41/53**, C04B 41/45, E04G 23/00

(21) Application number: **01119988.2**

(22) Date of filing: **18.08.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.07.2001 EP 01118195**

(71) Applicant: **Graver Technologies Europe GmbH
73730 Esslingen-Sirnau (DE)**

(72) Inventors:
- **Yarnell, Peter Alan
18960 Sellersville Pennsylvania 18960 (US)**
- **Shertok, Joel Terry
19711 Newark, Delaware 19711 (US)**
- **Tavares, Afons Mello III
19711 Randolph, New Jersey 07869 (US)**
- **Wichmann, Dirk
31226 Peine (DE)**

(74) Representative: **Weller, Wolfgang, Dr. et al
Witte, Weller & Partner
Patentanwälte
Postfach 105462
70047 Stuttgart (DE)**

# (54) A method and a device for restoring articles made of building materials

(57) A method for restoring articles made of building materials which have ionogenic components and which are contaminated by deposition of extraneous materials, erosion or conversion of the ionogenic components, is characterized in that a humidifiable carrier, having a powdered ion exchanger (20) distributed therein is applied onto a surface area (52) of the article (50), said ion exchanger (20) is selected in such a way that it selectively exchanges ions in the contaminated article up to a certain depth, said ion exchanger acts over a time period with maintaining a humid condition of the carrier, and said carrier together with the ion exchanger (20) is finally removed from said article (50) (Fig. 5).

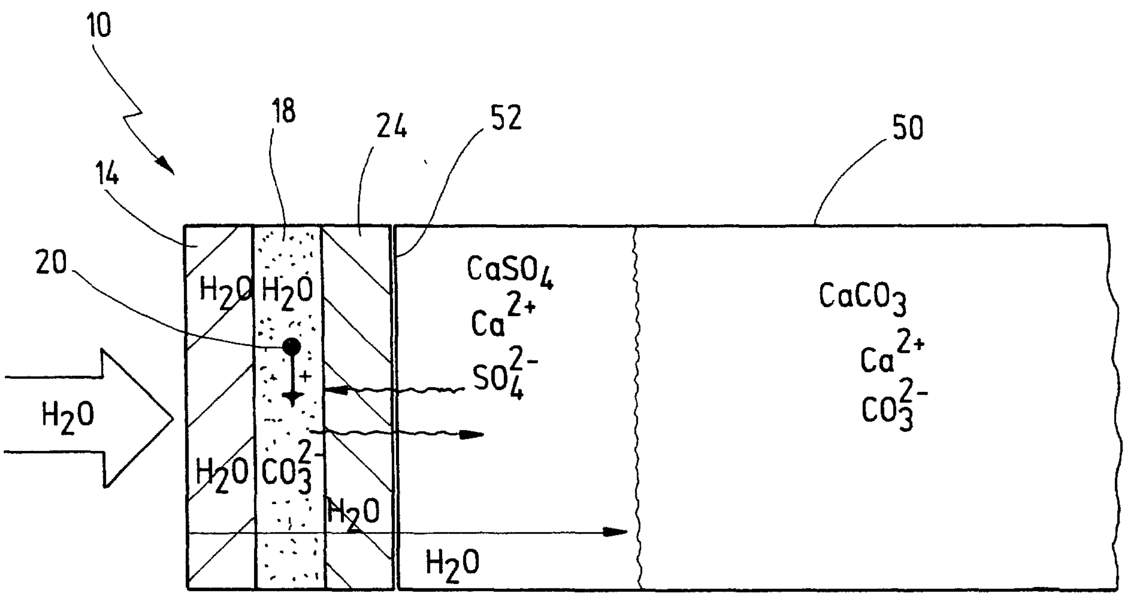


Fig.5

EP 1 279 652 A1

## Description

The invention relates to a method and device for restoring articles made of building materials having ionogenic components and which are contaminated by deposition of extraneous materials, erosion or conversion of the ionogenic components.

Articles made of building materials, in particular edifices, are permanently exposed to rough environmental conditions. Articles made of building materials are also sculptures, monuments or other works of art made of such materials. These are also decorations or ornaments, which exist at buildings or are integrated in their facades.

Due to the increasing environmental pollution, in particular by the world-wide industrialization in the 19th and 20th century, these articles made of building materials are exposed to aggressive media, which provide for a contamination.

Severe problems arised with the oxidation products of the element sulfur, which are produced in the combustion of fossil fuels like coal, fuel or natural gas. A particular problem here is sulfur dioxide, $SO_2$.

Besides of contaminations which result from a contamination of the environmental atmosphere, contaminations can also result from processes that have occurred in the edifices.

A typical example is a contamination by radioactive nucleotides in nuclear power plants.

As nuclear power plants have only a limited operation time, it is more and more necessary to close them down, wherein the edifices are pulled down. Due to the radioactive contamination, this is most problematic. "Restoring" according to the present invention concerns a proceeding with the aim to render edifices contaminated in such a way that they are safe for allowing a later demolition.

Returning to the above mentioned example of contamination because of environmental pollution, in particular by sulfur dioxide, mainly old edifices are concerned, in particular of historical meaning. These include in particular cathedrals, castles and the like, e.g. from the Middle Ages.

In the Middle Ages, building materials were used which consisted mainly of limestone or chalky sandstone, the chemical basic being calcium carbonate, $CaCO_3$.

The edifices are contaminated, at their outer side, by dirt particles existing in the environment, in particular finest soot particles, by an unattractive black and brown soot layer. This soot layer has the nasty feature to favor catalytic oxidation of sulfur dioxide according to the following equation (I)

$$SO_2 + H_2O + 1/2\ O_2 \xrightarrow[\text{oxidation}]{\text{catalytic}} H_2SO_4 \qquad (I)$$

The sulfuric acid arising in this catalytic oxidation reacts with the calcium carbonate of the building materials according to the following equation (II)

$$H_2SO_4 + CaCO_3 \rightarrow CaSO_4 + H_2O + CO_2 \qquad (II)$$

by forming calcium sulphate, so-called gypsum.

This phenomen is called "gypsumation" of calcite binders in building materials.

This conversion of calcium carbonate into calcium sulphate takes place up to a depth of several centimeters in such building materials.

As gypsum can absorb a high amount of water and has different crystalline characteristics, in particular different expansion coefficients than the original material calcium carbonate, therefore, a swelling and a peeling take place at the surface area of such building materials.

This has very disadvantageous consequences in the case that the facade of such edifices has a special structure or contour, in particular if sculptures exist. This resulted for medieval cathedrals for example in that the face contours of the sculptures completely disappeared.

First attempts to restore such articles were done, initially, by mechanical removing the outer soot layer, for example by sandblasting. A mechanical removing is an erosion of material at the articles themselves, which, depending on the progress of the contamination, results in the effect described before, namely, said sculptures are converted into bodies without contours.

Thus, attempts were made, in the second half of the 20th century, to use conserving or sheathing materials. By the growing development of the plastics industry, it was tried to impregnate the building materials with curable resins

or to coat the building materials with a synthetic resin. In doing so, it was overlooked that in large edifices, like a cathedral, a completely tight coating cannot be achieved and pollutants from the environment can nevertheless enter the building materials. These pollutants now captured in the sheathed or coated edifices were now not removed any more by environmental influences being positive per se like rain fall, and the decay of such building materials of such sheathed articles progressed even faster than before.

Thus, new ways for restorations were searched for with the aim to bring such articles back into their original state or into a state as near as possible to the original state, wherein it was intended, in particular, to work without a high erosion of material.

It is thus object of the present invention to create a method and a device for restoring articles made of building materials comprising iogenic components, in order to restore these in an economic and effective way.

According to the invention, this object is achieved by a method comprising the following steps, namely applying a humidifiable carrier having a powdered ion exchanger distributed therein onto a surface area of the article, wherein the ion exchanger is configured in such a way that it selectively exchanges ions in contaminated articles up to a certain depth, acting of the ion exchanger over a time period by maintaining a humid condition of the carrier; and removing the carrier together with the ion exchanger from the article.

According to the invention, this object is achieved by a device, which is characterized by a humidifiable carrier having a powdered ion exchanger distributed therein, wherein said ion exchanger is configured in such a way that it selectively exchanges ions in the contaminated article up to a certain depth.

Ion exchangers are materials that are able to replace ionogenic components by other components. In the sense of the present invention, the general term "ion exchanger" is also a substance that is able to exchange radioactive nucleotides, i.e. to remove these from one of the building materials.

Ion exchangers are solid materials that were up to now, usually, used in pellet form to exchange ions in fluid mediums.

The idea of the present invention is to bring such ion exchangers into the form of a fine powder, to transfer this powder finely distributed into a carrier and to put this assembly in contact with the outer side of the article made of the contaminated building material. By adding humidity in the form of water, a medium is provided that serves for the transport of ions.

It could be found out that, if these conditions were chosen, it is possible to carry out an exchange of deposited or converted extraneous materials up to a certain depth of the article made of building materials within a short time period. A remarkable mass transfer takes place which is an important factor to an efficient restoration. The finely powdered ion exchanger which is finely distributed in the carrier allows in connection with the ion transport medium water this remarkable mass transfer. Surprisingly, said mass transfer occurs up to a remarkable depth allowing to restore the entire contaminations up to said depth.

If one takes the above mentioned example of the gypsumated limestone materials of historical edifices from the Middle Ages, it is possible to replace the sulphate ions formed following to equation (II), by carbonate ions, thereby forming solid calcium carbonate, i.e. the originally existing solid material. This happens within a relatively short time period of about 4 to 24 hours, wherein depths of penetration of 15 to 35 mm can be achieved. The ion transport medium water also penetrates into these building materials that always have a certain porosity or capability of absorbing water. This is not only valuable for building materials of limestone or of chalky sandstone, but also for modern building materials made of concrete. The binder is cement, a three-dimensional calcium-aluminum-silicate matrix.

Remarkable corrosion damages due to environmental influences were also found at edifices made of concrete, in particular at sight concrete edifices usual in Europe in the second half of the 20th century. Since also a high-quality concrete has a considerable capacity of absorbing water, the possibility is given, by means of the ion migration medium water, to carry out a treatment of concrete edifices by ion exchangers. This applies also for contaminated nuclear power plants, since materials are known which selectively exchange radioactive nucleotides, which are released in nuclear fission. There are, for example, materials which are selective for radioactive cesium, chromium, silver, strontium, cobalt, manganese, iron, nickel, zinc, plutonium and the like. It is now possible to remove the nucleotides with the method of the invention before demolition of these contaminated edifices, wherein these are then transferred into the corresponding device, which is, however, much easier to dispose than contaminated building materials.

It is also possible to fill cavities by ion exchangers which cavities were created by erosion. To this end, first of all, a provisory ionogenic filling material in fluid form can be entered into this cavity, e.g. a saline solution, the ion thereof can be exchanged to a solid material via ion exchangers. This allows, too, to decontaminate "salted" building materials, i.e. materials contaminated with salts like NaCl, $NaNO_3$, $MgSO_4$, $Na_2SO_4$, some of which show hygroscopic properties.

The particle size of the powdered ion exchanger is less than 200 microns, specifically in the range of 1 micron to 150 microns, more specifically in the range of 30 microns to 100 microns, and most specifically in the range of 50 microns to 70 microns.

Within these ranges, depending on the building material to be restored and depending on the kind of contamination, a particular efficient restoration is possible.

In a further embodiment of the invention, the ion exchanger in powder form is slurried in water as a carrier.

In a particularly advantageous manner, additives are added to the slurry, which give same a pasty and also an adhesive consistency.

In this embodiment of the invention, it is possible to apply the ion exchanger with the slurry onto large surface areas of the edifices and to wash it off after use. This embodiment may be particularly used if highly contoured surfaces are present, because the slurry is able to adapt to all contours. This embodiment is preferred if the subsequent washing off and collecting the slurry washed off is no problem.

Additives serve, on the one hand, for keeping the slurry even over longer time periods at vertical surfaces by avoiding a flow down due to gravity. Adhesive additives additionally serve for adhering the slurry to the surface. The pasty configuration provides for the fine powdered ion exchanger remaining finely distributed in the slurry.

In a further embodiment of the invention, a two-dimensional flexible carrier is used as a carrier.

This measure has the advantage that the carrier can be applied over large areas onto building fronts, but it is also able to adapt to roundings, contours and the like, due to its flexibility. This facilitates particularly the handling because such a flexible carrier can be manufactured in the form of endless material and can easily be brought to the respective edifice. After restoration it can be taken off and disposed.

In a further embodiment of the invention, the two-dimensional flexible carrier has a fabric structure.

Fabrics in the sense of the present application are any materials manufactured from fiber materials. These may be fabrics in woven or non woven form, with the materials being plastics, natural materials or even glass fibers.

Such a fabric structure is excellently suitable as a carrier for the powdered ion exchanger and has a sufficiently porous structure, so that the ion transport medium water can pass the carrier.

In a further embodiment of the invention, the two-dimensional flexible carrier is constructed as a laminate.

This measure has the advantage that, by means of the laminate structure, the two-dimensional flexible carrier is simple to manufacture, simple to handle and also safely transportable. The powdered ion exchanger is integrated into the laminate in a protected manner. After the treatment, the contaminations are captured therein. This may be particularly useful in the case of building materials contaminated with nucleotides.

In a further embodiment of the invention, the laminate has a layer containing a solid, but water-soluble binder, in which binder the ion exchanger is finely distributed, and that this layer is laminated on a layer of a water-insoluble fabric with open pores.

This measure has manufacture advantages in that the ion exchanger can be distributed very finely as a solid material in a water-soluble binder, wherein the binder serves as a thinner and as a carrier medium, and, then, this mixture is laminated onto a fabric structure. In this embodiment, the laminate can be rolled up in such a way that, respectively, the layer with the ion exchanger is located at the inner side and, thus, is protected. The ion transport medium water can enter the open pored structure, and the ion exchanger is released by the dissolved binder and thereby activated.

In a further embodiment of the invention, a third layer of a water-insoluble, but water-permeable third layer with adhesive characteristics is laminated onto the face having the binder/ion exchanger layer, wherein said third layer has, advantageously, adhesive characteristics.

By this embodiment, the layer containing the ion exchanger is additionally protected. The adhesive properties of the third layer can simultaneously be used to fix the laminate onto an article. This third layer remains firmly adhering on the article and is not dissolved by water, but can be penetrated by same.

In a further embodiment, the two-dimensional flexible carrier has two layers of fabric materials, between same the ion exchanger in powder form is received.

In this embodiment, it is particularly advantageous if the two layers made of fabric material are connected with each other in such a way that pockets are formed between them.

In this embodiment, a particularly economic manufacture of flexible carriers is possible, in which the ion exchanger is protected on both sides by the two layers made of fabric material. By connecting these two layers in such a way that pockets are formed, it is guaranteed that the ion exchanger in powder form does not shift or move between these two layers, in particular, not during use at vertical edifice walls, where the added water flows off due to the gravity.

The connection of the two layers can be done simply by sewing them up with each other. With longitudinal seams and transversal seams the corresponding pockets are configured.

This allows a particularly efficient industrial manufacturing.

By selecting the grain size of the ion exchanger and a suited pore structure the finely powdered ion exchanger is captured between the two layers. Nevertheless, water is able to penetrate this laminate and to provide for ion transport.

In a particular embodiment of the method of the invention, the carrier is fixed at the article and, during the acting step, the carrier is humidified.

This measure has the advantage of easy handling, i.e. the carrier can, first of all, be applied onto the article

to be treated, followed by a continuously humidifing by spraying or splashing water therein. It is also possible to apply the carrier in slightly humidified condition and to humidify additionally during the acting step.

Should the water flowing off in this procedure be a problem, the carrier may also be configured in such a way that it has a high capacity of absorbing water and a high capacity of retaining water. A sufficient amount of water being available in the carrier itself to provide for the ion transport over a certain time period.

This embodiment can be particularly advantageous if, for example, a restoration is to be carried out at high slim church tower tops consisting of such building materials and sprinkling or humidifying is not at all possible or only with great difficulties. This variant may also be used in the restoration of sculptures, which can then be completely covered and sheathed by such a humidity-containing carrier, so that a sufficient amount of humidity is left in the sheathed article to provide for the ion exchange.

It is to be understood that the features mentioned above and those yet to be explained below can be used not only in the respective combinations indicated, but also in other combinations or in isolation, without leaving the scope of the present invention.

The invention will be described and explained in more detail by means of some preferred embodiments in connection with the attached drawings. In the drawings:

Fig. 1 shows a longitudinal section of a device according to the invention in the form of a laminate;

Fig. 2 shows a longitudinal section of a further embodiment in laminate form comparable to the embodiment shown in Fig. 1;

Fig. 3 shows a top view on the two-dimensional laminate of Fig. 2;

Fig. 4 shows a cross section of a brick of a historical edifice of limestone which is contaminated in the area of its outer side by gypsumation;

Fig. 5 shows the realization of the method according to the invention with the device shown in Fig. 1;

Fig. 6 shows the brick of Fig. 4 after the restoration by means of the method according to the invention or of the device according to the invention;

Fig. 7 shows a restoration of an article of concrete, at the outer side of which a device of the invention in the form of a slurry is applied onto, comparable to the embodiment shown in Fig. 5; and

Fig. 8 shows the restored article of Fig. 7 after a treatment according to the invention.

A device according to the invention shown in Fig. 1 is generally designated with the reference numeral 10.

The device 10 is structured of three layers as an extensive flexible laminate. A first outer layer 14 consists of a fabric 16 in the shown embodiment an open-weave, spun bond fabric. Onto one side of first layer 14, a second layer 18 is laminated, which consists of a fine powdered ion exchanger 20, which particles are kept together by a binder 22.

An example of an ion exchanger 20 is e.g. a POWDEX PREMIX 22H ion exchanger, as it is sold by Graver Technologies Europe GmbH, Germany, 73730 Esslingen. This ion exchanger is a fine powdered solid material with a particle size of < 0.2 mm with a bulk density of 570 to 660 g/l and a density of approximately 1.4 g/ml. The matrix is basically made of synthetic resin, namely of cross-linked polystyrene. The functional groups are quaternary amines, which are charged with carbonate groups as exchange groups.

Onto this second layer 18 of ion exchanger 20 and binder 22, a third layer 24 is laminated, which consists of a water-insoluble, but water-permeable adhesive 26. This assembly serves as a carrier 12 for the ion exchanger 20. The use of the device 10 for carrying out the method of the invention will be later described in more detail by means of Fig. 4 through 6.

In Fig. 2 and 3, a further embodiment of a device according to the invention is shown, which is generally designated with the reference numeral 30.

In this embodiment, the carrier 32 consists of two layers 34 and 35, which each consist of a fabric 36 and 37, as was described before by means of fabric 16. Between the two layers 34 and 35, an ion exchanger 40 is held captive.

To this end, the two layers 34 and 35, as can be seen in particular from Fig. 3, are sewed up with each other via longitudinal seams 42 and transversal seams 44, resulting in a plurality of pockets 46, in which the ion exchanger 40 is captured.

The device 30 shown in Fig. 3 may have a width of approximately 1 m and a length of approximately 2.50 m, but can be cut from an endless band material. The thickness of the entire device is approximately 1.5 cm. Due to the

flexibility of layers 34 and 35, device 70 can be piled and transported as rolls. For being applied onto flat articles, at the outer four edges, eyes 48 are provided, e.g. in the form of holes, via which the device 30 can be fixed onto the outer side of an edifice.

The realization of the method according to the invention will now be described in more detail by means of Figs. 4 through 6 in connection with the restoration of the outer side of a cathedral from the Middle Ages, i.e. a period of erection that was approximately 1000 AD.

The outer face of the edifice is constructed of numerous outer sides 52 of bricks 50. For the sake of simplicity, only one such brick 50 is partly shown in the area of the outer side in section. A typical building material in that era was limestone, i.e. the main component is calcium carbonate $CaCO_3$ in the form of calcite crystals. Depending on the arising of the limestone, several inclusives of organic origin exist. In other building periods, chalky sandstone was used, in which quartz particles are additionally enclosed.

Due to the increasing environmental pollution in particular by sulfur dioxide, the above described conversion of calcium carbonate, $CaCO_3$, into calcium sulphate (gypsum), $CaSO_4$, has taken place.

This so-called gypsumation has taken place up to a depth 54, which can be up to several centimeters. Measurements on such edifices have shown that up to a depth of penetration of approximately 2 mm, more than 30 % of the originally existing calcium carbonate was converted into calcium sulphate.

In that way, in the area of outer side 52 of brick 50, a gypsumed layer that is several millimeters thick was formed, which has a high capacity of absorbing water and is near to peeling off. As the gypsumation progresses more and more from the outer side to the inner side, the inner younger gypsum layers press the outer older gypsum layers to the outward and cause the peeling. Since in the gypsumation, as can be seen from equation (II), also humidity and gaseous components arise, an inner pressure arises which provides for a peeling even without outer mechanical influences.

In Fig. 5, a situation is shown, after a device 10 was applied to outer side 52 of brick 50 and, of course, at the outer side of the adjacent bricks, as shown in Fig. 1.

The device 10 adhesives firmly and tightly lying on its layer 24 with adhesive characteristics at outer side 52. Water ($H_2O$) is supplied to the initially dry device 30 from the outer side, as it is indicated by an arrow. The supplied water penetrates first layer 14 made of glass fiber fabric, penetrates into central second layer 18, releases, in doing so, ion exchanger 40. The humidity penetrates also third layer 24 and also penetrates into the material of brick 50, as is indicated by arrows. The water provides now a medium for an ion exchanging, which is done in such a way that carbonate ions $CO_3^{2-}$ of the ion exchanger are transferred into the inner part of brick 50, wherein in the countermove, sulphate ions $SO_4^{2-}$ are let out and tranferred into the direction of central layer 18 to ion exchanger 20. As an additional measure, it is possible to humidify the wall prior to applying the device 10.

The sulphate ions are now replaced by carbonate ions.

The acting step is performed for approximately 24 hours, during that period the device 10 has to be steadily humidified or sprinkled with water from the outer side.

After 24 hours, the device 10 is taken off.

This time period is sufficient to replace the sulphate ions deposited by environmental pollution by carbonate ions by means of the highly active ion exchanger over the entire depth 54. As a result, the brick 50 is restored insofar that its original chemical structure is restored, namely, that in the area of the outer side only calcium carbonate existed again. Calcite crystals can gradually form, and the brick is considerably solidified in its outer side area.

It is surprising to notice that this procedure can be carried out up to such a considerable depth 54 in a brick 50 together with a nearly complete replacement of the contaminating sulphate ions.

In that manner, the possibility is given to restore large edifices, like e.g. several hundreds of meters high towers and facades of cathedrals, in relatively short time.

Due to the flexibility of device 10, same snugly fits the outer contours, so that ornaments and even sculptures can be restored, no matter whether they are fixed at the outer wall or chiseled in them. As after the restoration a surface layer is created, which corresponds to the original chemical composition and which is very solidified, even fine structures like faces, gowns or the like can be thoroughly restored with the original shape.

In Fig. 7, another embodiment of a device of the invention and of a method of the invention is shown.

The article made of building material to be restored in this case is a wall 50 made of concrete.

Concrete is a material which consists of a coarse-grained aggregate material like sand or pebble, which is embedded in a cement binder matrix. Cement forms after hardening a three-dimensioned matrix of calcium-aluminum-silicates. In Fig. 7, a situation is shown in which through finest gaps 78 in the outer side 62 of the wall contaminations have entered, wherein these in the embodiment shown consist also of sulphate ions, which were created via sulfur dioxide from environmental atmosphere. Onto outer side 62, a device 70 of the invention is applied in form of a slurry 72. Slurry 72 consists of a slurry of an ion exchanger 80 in water 74, wherein it is provided by the use of additives that slurry 72 has a certain pasty consistency, in which the fine powdered ion exchanger 80 is kept finely distributed and which has also certain adhesive properties, so that slurry 72 adheres at outer side 62 of vertical edifices. In the case

shown in Fig. 7, ion exchanger 80 is configured in such a way that it carries the cation of barium as an exchange ion, namely $Ba^{2+}$. The barium ions inserted by the cation exchanger 80 react, with the contaminations in the form of sulphate ions, to water-insoluble barium sulphate. Thus, immobilized barium sulphate grains 83 are formed, as shown in Fig. 8.

The contamination in the form of sulphate ions is not removed by replacing the sulphate ions as in the example mentioned before. Rather, a cation is added to the sulphate ions, which results in insoluble barium sulphate. As exchange ions, calcium ions can be withdrawn from the calcium-aluminum-silicate matrix.

The restoration is now done, as can be seen from Fig. 8, by neutralizing the contamination by forming an innocuous immobilized molecule in the form of immobilized barium sulphate.

After the acting step, slurry 72 is washed off or rinsed off.

In Fig. 8, at the lower end, it is shown that it is also possible to restore such a concrete wall 60 which is contaminated by radioactive nucleotides, as, for example, in the embodiment shown by $^{137}Cs$ or by $^{90}Sr$.

In the decontamination of power plants, the ion exchanger is preferably worked into a laminate structure as shown in Fig. 1 and 2. Such radionucleotide selective ion exchangers are available as powdered solid materials and consist, for example, of zeolithes, or potassium hexacyanoferrates in a titan dioxide matrix. Such ion exchangers that were up to now used in the decontamination of fluids are available from the Company Selion OY in Vantaa, Finland.

After removing the radionucleotides from the wall 60, the corresponding device is taken off and must be suitably disposed. Subsequently demolition works can be carried out on the edifice, which contains wall 60.

By varying the ion exchangers, they can be adapted to different contamination cases, e.g. very highly salified building materials can be restored by replacing the salts, i.e. their cations and also their anions, are replaced by innocuous ions. Depending on whether these salts are inserted from the outside or formed in the building material, then, a suitable replacement with respect to the original material or a replacement with respect to an innocuous material can be carried out. In the case of erosions, the corresponding cavities can be filled with ionogenic materials and then be replaced by ions from the ion exchanger, which finally form solid materials, which fill up these erosions.

## Claims

1. A method for restoring articles made of building materials, which have ionogenic components and which are contaminated by deposition of extraneous materials, erosion or conversion of the ionogenic components, comprising the steps of

   - applying a humidifiable carrier having a powdered ion exchanger distributed therein onto a surface area of the article, wherein said ion exchanger is configured in such a way that it selectively exchanges ions in the contaminated article up to a certain depth therein;
   - acting of the ion exchanger over a time period with maintaining humid condition of the carrier; and
   - removing the carrier together with the ion exchanger from said article.

2. The method of claim 1, **characterized in that** a powdered ion exchanger having a particle size of less than 200 microns, specifically in the range of 1 micron to 150 microns, more specifically in the range of 30 microns to 100 microns, and most specifically in the range of 50 microns to 70 microns, is used.

3. The method of claims 1 or 2, **characterized in that** the powdered ion exchanger is slurried in water as a carrier.

4. The method of claim 3, **characterized in that** additives are added to the slurry, which give same a pasty consistency.

5. The method of claims 1 or 2, **characterized in that** a two-dimensional flexible carrier is used as a carrier, which is applied onto said article.

6. The method of claim 5, **characterized in that** a fabric is used as a two-dimensional flexible carrier.

7. The method of anyone of claims 1 through 6, **characterized in that** the carrier is humidified during the acting step.

8. The method of anyone of claims 1 through 7, **characterized in that** the carrier is fixed at the article.

9. The method of anyone of claims 5 through 8, **characterized in that** the ion exchanger is finely distributed in powdered form into the carrier and **in that** the two-dimensional carrier, still dry, is applied onto the article and subsequently humidified.

**10.** The method of anyone of claims 5 through 8, **characterized in that** the ion exchanger is finely distributed in powdered form into the carrier, said carrier is humidified, and said humidified carrier is applied onto said article.

**11.** The method of anyone of claims 1 through 10, **characterized in that** the ion exchanger is selected in such a way that it exchanges deposited extraneous ions by the originally existing ions.

**12.** The method of anyone of claims 1 through 10, **characterized in that** the ion exchanger is selected in such a way that it immobilizes deposited extraneous ions by depositing counter ions.

**13.** The method of anyone of claims 1 through 10, **characterized in that** the ion exchanger is selected in such a way that it exchanges deposited extraneous ions and replaces them by innocuous ions.

**14.** The method of anyone of claims 1 through 10, **characterized in that** the ion exchanger is selected in such a way that it fills interstices in the material with innocuous materials.

**15.** A device for restoring articles made of building materials, which have ionogenic components and which are contaminated by deposition of extraneous materials, erosion or conversion of the ionogenic components, **characterized by** a humidifiable carrier (12, 32) having a powdered ion exchanger (20, 40, 80) distributed therein, wherein said ion exchanger is configured in such a way that it selectively exchanges ions of the contaminated article up to a certain depth (54).

**16.** The device of claim 15, **characterized in that** the particle size of the powdered ion exchanger (20, 40, 80) is less than 200 microns, specifically in the range of 1 micron to 150 microns, more specifically in the range of 30 microns to 100 microns, and most specifically in the range of 50 microns to 70 microns.

**17.** The device of claims 15 or 16, **characterized in that** the carrier is water, in which the powdered ion exchanger (80) is slurried.

**18.** The device of claim 17, **characterized in that** additives are contained in the slurry, which give the slurry a pasty consistency.

**19.** The device of claims 15 or 16, **characterized in that** the carrier (12, 32) is configured as two-dimensional flexible carrier.

**20.** The device of claim 19, **characterized in that** the two-dimensional flexible carrier has a fabric structure.

**21.** The device of claims 19 or 20, **characterized in that** the two-dimensional flexible carrier (12, 32) is constructed as a laminate.

**22.** The device of claim 21, **characterized in that** the laminate has on one side a water-insoluble, but water-permeable layer (26) with adhesive characteristics.

**23.** The device of claims 21 or 22, **characterized in that** the laminate has a layer (18) containing a solid, but water-soluble binder (22), in which binder the ion exchanger is distributed very finely, and that this layer (18) is laminated on a layer (14) of a water-insoluble fabric with open pores.

**24.** The device of anyone of claims 20 through 23, **characterized in that** the fabric structure is made of glass fibers.

**25.** The device of claims 23 or 24, **characterized in that** a water-insoluble, but water-permeable layer (24) is laminted onto the layer (18).

**26.** The device of claim 25, **characterized in that** the layer (24) has adhesive properties.

**27.** The device of anyone of claims 19 through 21, **characterized in that** the two-dimensional flexible carrier (32) is made of two layers (34, 35) of fabric materials, between same the ion exchanger in powder form is captured.

**28.** The device of claim 27, **characterized in that** the two layers made of fabric material (36, 37) are connected with each other in such a way that pockets (46) are formed between them, said ion exchanger is received in said pockets (46).

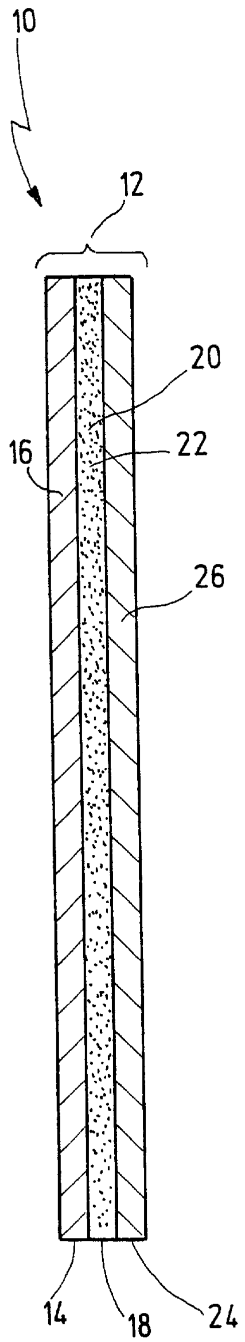


Fig.1

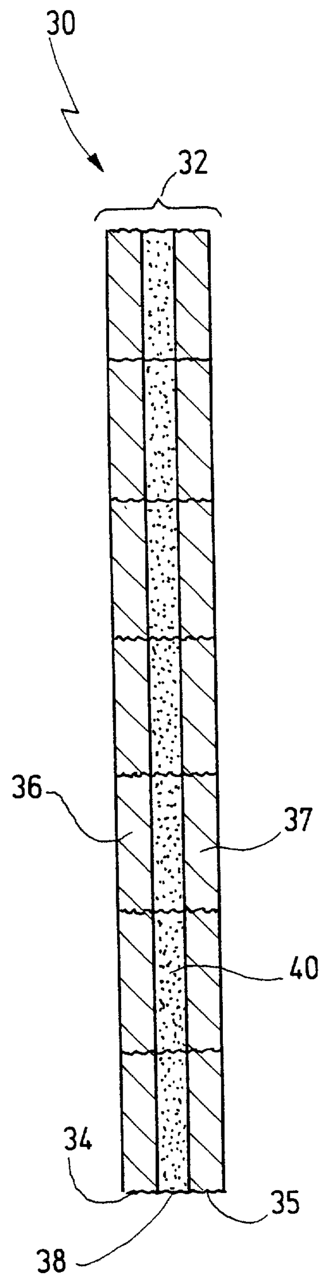


Fig.2

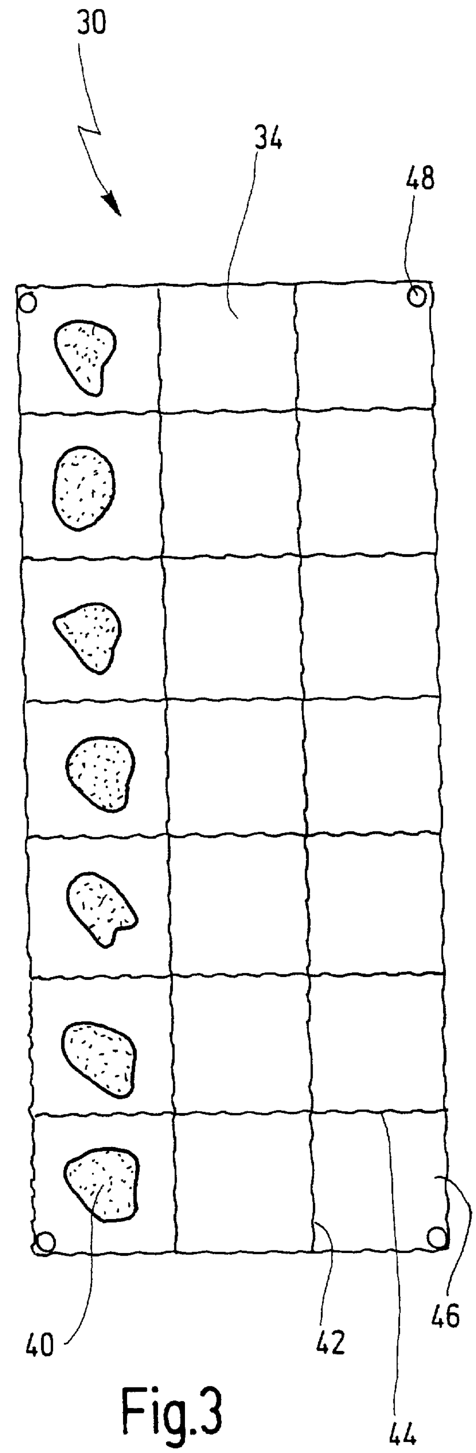


Fig.3

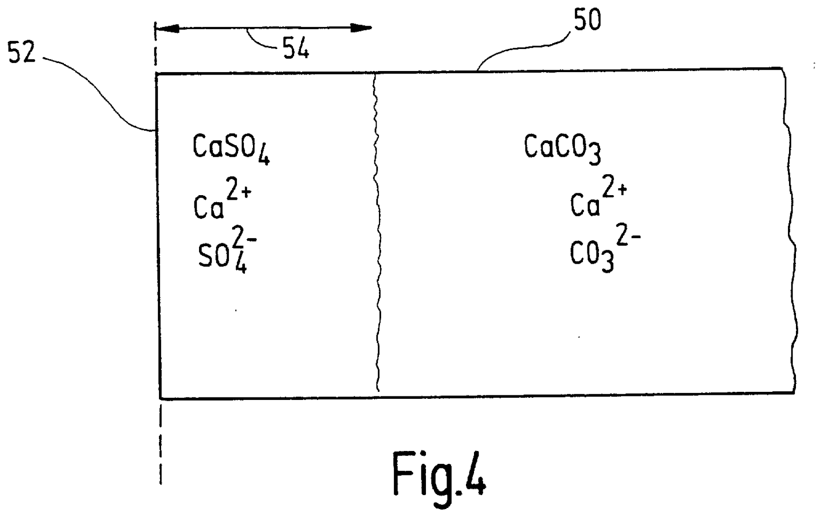


Fig.4

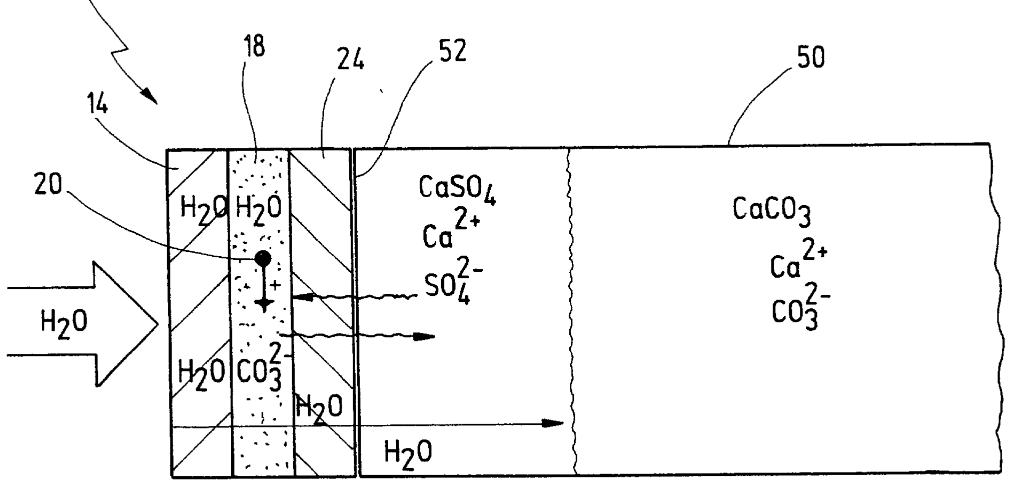


Fig.5

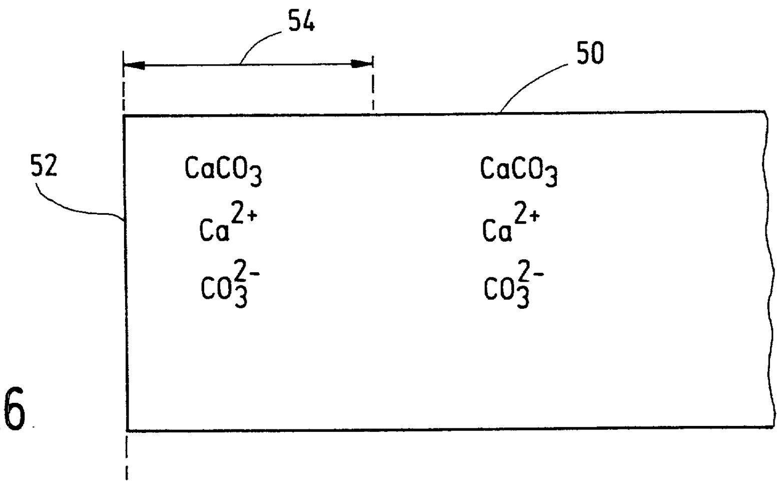


Fig.6

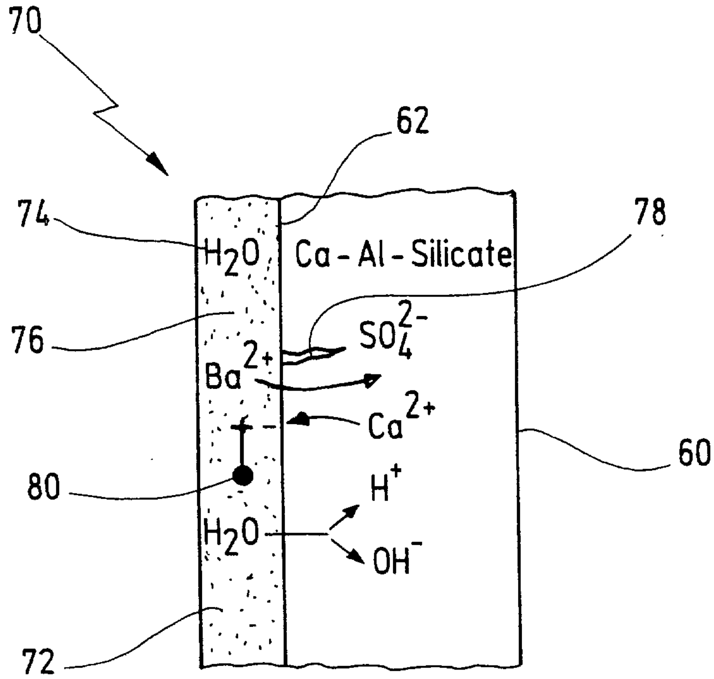
70
62
74
78
$H_2O$
Ca - Al - Silicate
76
$SO_4^{2-}$
$Ba^{2+}$
$Ca^{2+}$
60
80
$H^+$
$H_2O$
$OH^-$
72

Fig.7

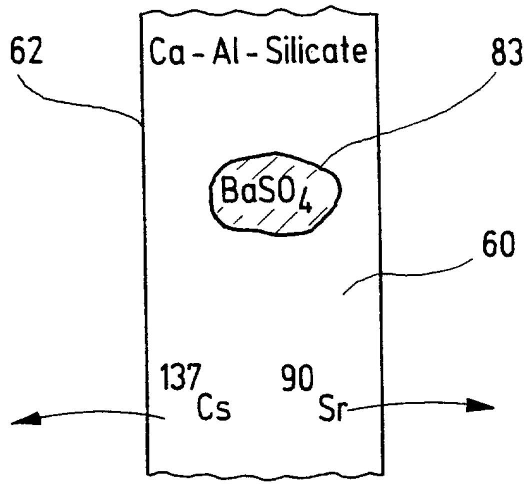
62
Ca - Al - Silicate
83
$BaSO_4$
60
$^{137}Cs$
$^{90}Sr$

Fig.8

European Patent Office

# EUROPEAN SEARCH REPORT

Application Number
EP 01 11 9988

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 198 38 416 A (SIEMENS AG) 9 March 2000 (2000-03-09)<br>* claims 1,2,5,7,11-13 *<br>* column 2, line 53 - line 56 *<br>* column 3, line 51 - column 4, line 2 * | 1,3-10, 13,15, 17, 19-21,24 | C04B41/53<br>C04B41/45<br>E04G23/00 |
| X | EP 0 263 486 A (LARAC SPA) 13 April 1988 (1988-04-13)<br>* claim 1 *<br>* column 2, line 19 - line 24 *<br>* column 3, line 51 - column 4, line 2 * | 1-4,7,8, 11-13, 15-18 | |

TECHNICAL FIELDS SEARCHED (Int.Cl.7)
C04B

The present search report has been drawn up for all claims

| Place of search | Date of completion of the search | Examiner |
|---|---|---|
| MUNICH | 9 July 2002 | Rosenberger, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 11 9988

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2002

| Patent document cited in search report | | Publication date | Patent family member(s) | | Publication date |
|---|---|---|---|---|---|
| DE 19838416 | A | 09-03-2000 | DE | 19838416 A1 | 09-03-2000 |
| | | | WO | 0010940 A2 | 02-03-2000 |
| EP 0263486 | A | 13-04-1988 | IT | 1197829 B | 06-12-1988 |
| | | | AT | 70560 T | 15-01-1992 |
| | | | CA | 1295781 A1 | 11-02-1992 |
| | | | DE | 3775323 D1 | 30-01-1992 |
| | | | EP | 0263486 A2 | 13-04-1988 |
| | | | US | 5069811 A | 03-12-1991 |

EPO FORM P0459

For more details about this annex : see Official Journal of the European Patent Office, No. 12/82